# EUROPEAN PATENT APPLICATION

(11) **EP 1 574 128 A1**
(43) Date of publication of application: **14.09.2005**
(21) Application number: 02783564.4
(22) Date of filing: 15.11.2002
(51) Int. Cl.: A01K 1/015

(54) **FLOOR AND METHOD FOR BREEDING DOMESTIC ANIMALS**

(71) Applicant: Japan Applied Microbiology Research Institute Ltd, Yamanashi 409-3812 (JP)
(72) Inventor: HORIUCHI, Isao, Yamanashi 409-3812 (JP); RI, Koubu, Yamanashi 409-3812 (JP); HIRAMA, Minoru, Yamanashi 409-3812 (JP); HIROSE, Yuhichi, Yamanashi 409-3812 (JP); ITOH, Masahiro, Yamanashi 409-3812 (JP)
(74) Representative: Wilson Gunn Gee
(86) International application number: PCT/JP2002/011912
(87) International publication number: WO 2004/045275

(57) **Abstract**

A floor surface 2 of the breeding house 1 for bred pigs as shown in FIGs.1 to3 is finished in concrete and air pipes 3 are piped on the whole of the floor surface 2. The air pipes 3 comprise outer peripheral pipes 3a disposed along the peripheral edges of the concrete floor surface 2 and connecting pipes 3b disposed at predetermined intervals rightward and leftward of the outer peripheral pipes 3a and connecting with the outer peripheral pipes. Moreover, one end of the outer peripheral pipes 3a is connected to a blower unit 4 provided outside of the breeding house 1 so that air is fed uniformly to the entire concrete floor surface 2 through the air pipes 3. A method for breeding domestic livestock, in which a floor structure for sufficiently resolving excreta of the bred pigs is provided, and the resolved excreta are used not only as compost, but also reproduced as feed for the bred pigs.

## Description

### Technical Field

The present invention relates to a breeding floor for domestic livestock and a method for breeding the domestic livestock, particularly, to a breeding floor for domestic livestock and a method for breeding the domestic livestock suitable to resolve a large amount of excreta in a hog factory and reproduce the excreta as pig feed.

### Background Art

Generally, the greatest problem in a large-sized hog factory is the treatment of a large amount of excreta; the bad smell of the excreta and mass disposal thereof represent a critical problem for the environment. A conventional technology has proposed a floor structure in which a mixture of sawdust, rice chaff, fermenter and rice bran is laid on a concrete floor of a pig house for solving this kind of problem. In such a floor structure, the excreta of bred pigs are resolved by the fermenter, limit the bad smell and reuse the excreta as compost.

However, in the above-mentioned floor structure, because the fermenter is mixed into the sawdust and the rice chaff and composted, and the pigs are bred, if the sawdust and the rice chaff are wetted by a great deal of excreta evacuated from the pigs, the fermenter is not sufficiently activated, and the bad smell is not removed.

Moreover, because the fermented and resolved excreta remain as compost when a large amount of composts are pooled, a new environmental problem occurs.

Therefore, the first object of the present invention is to provide a floor structure in which the excreta of bred pigs are sufficiently resolved.

In addition, the second object of the present invention is to provide a method for breeding domestic livestock in which the resolved excreta are not only used as compost, but also reproduced as feed for the bred pigs.

The present invention intends to provide the title capable of solving the problems.

### Disclosure of Invention

The inventors have found out that it is in fact possible to resolve excreta of domestic livestock efficiently and reached to the present invention by feeding air into the inside of an organic fiber material such as sawdust and rice chaff and adjusting the operational environment of aerobic microbes, as a result of keen research to solve the above-mentioned problems. In addition, the inventors have discovered that aromatic feed is produced by allowing yeast cells to act on the resolved product of the excreta and fermenting it, and arrived at the present invention.

More specifically, the breeding floor for domestic livestock, according to the present invention, is characterized in that groove portions for providing air pipes are provided in the floor surface, the air pipes provided with a plurality of small holes for blowing out air are disposed in the grooves, and an organic fiber material in which aerobic microbes are absorbed is laid on the floor surface.

Moreover, the method for breeding domestic livestock, according to the present invention, is characterized by feeding air to the air pipes disposed in the floor surface, blowing out air from the plurality of small holes provided in each of the air pipes and maintaining the inside of the organic fiber material laid on the floor surface in a state of aerobic ambience and dryness, to resolve excreta of the domestic livestock evacuated on the organic fiber material by the action of aerobic microbes absorbed in the organic fiber material.

Furthermore, the method for breeding domestic livestock, according to the present invention, is characterized by collecting the product obtained from resolving the excreta of the domestic livestock, promoting fermentation by the action of yeast cells on the collected product and using it as feed for the domestic livestock.

According to the breeding floor for the domestic livestock and the method for breeding the domestic livestock, air can be fed from the plurality of small holes provided in the air pipes into the inside of the organic fiber material laid on the floor surface. Therefore, the organic fiber material is maintained in a dry state; at the same time the inside of the organic fiber material is maintained in aerobic ambience to activate functioning of the microbes, and the resolution of the excreta is promoted.

### Brief Description of the Drawings

FIG.1 is a schematic view showing the breeding house according to the present invention.
FIG.2 is a sectional structural view of the breeding floor.
FIG.3 is an explanatory view showing the piping structure of the air pipes in detail.

### Best Mode for Carrying out the Invention

A mode for carrying out the breeding floor for domestic livestock and the method for breeding the domestic livestock, according to the present invention, will be explained in detail with reference to the accompanying drawings in order to describe the present invention in more detail.

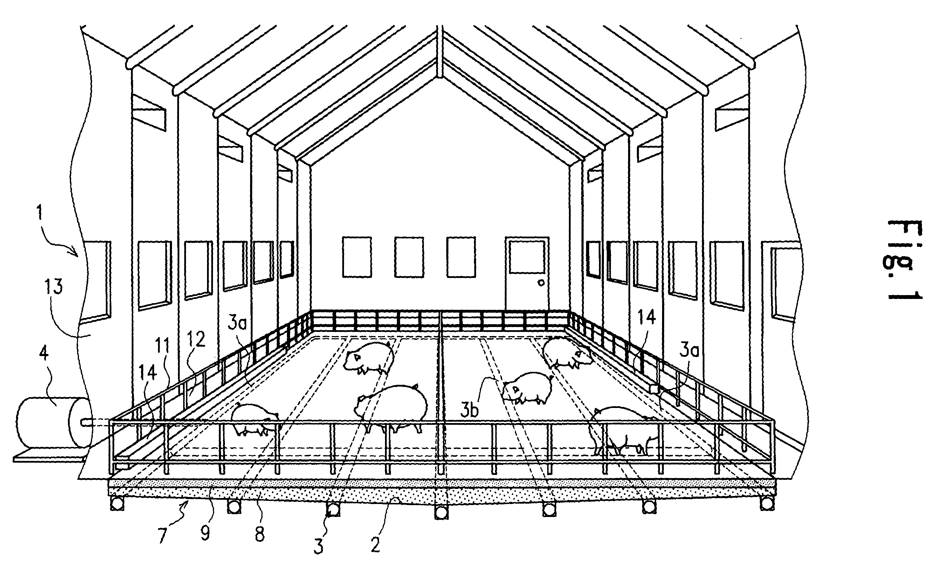

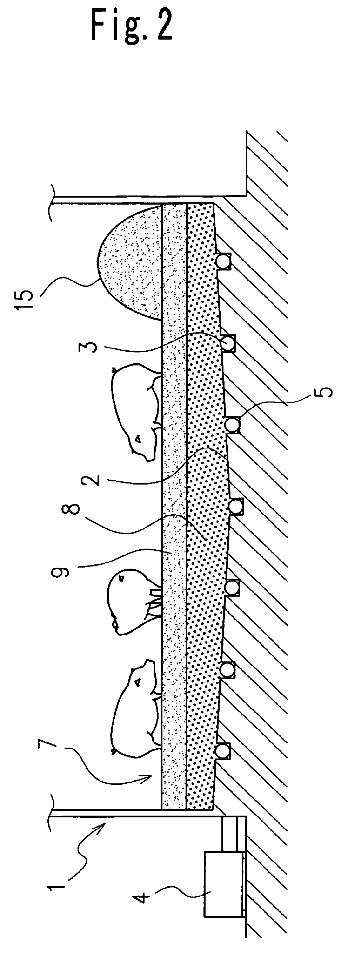

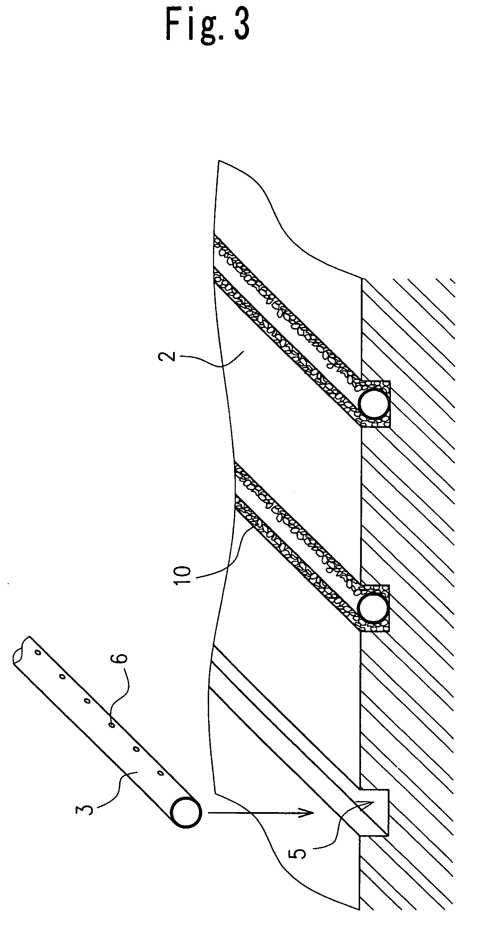

In the mode for carrying out the invention, an explanation is made of the breeding for bred pigs; FIG.1 is a schematic view showing the breeding house for the bred pigs, FIG.2 is a sectional structural view of the breeding floor, and FIG.3 is an explanatory view showing the piping structure of the air pipes in detail.

The floor surface 2 at the breeding house 1 for the bred pigs is finished in concrete and the air pipes are piped throughout the whole of the concrete floor surface 2. The air pipes 3 comprise outer peripheral pipes 3a disposed along the peripheral edges of the concrete floor surface 2 and connecting pipes 3b disposed at predetermined intervals rightward and leftward of the outer peripheral pipes 3a and connecting with the outer peripheral pipes. Moreover, one end of the outer peripheral pipes 3a is connected to a blower unit 4 provided outside of the breeding house 1 so that air is fed uniformly to the entire concrete floor surface 2 through the air pipes 3.

Moreover, each air pipe 3 is provided with small holes 6 which blow out air and are disposed laterally and downwardly at intervals of between 20 to 30 cm throughout the entire piping of the air pipes so that air sent forcibly from the blower unit 4 is blown out from the small holes 6 simultaneously. Meanwhile, it is preferable that the diameter of each of the small holes is part 2mm. If the diameter is too small, it is possible that the amount of air blown out is insufficient; if the diameter is too large, the holes may become clogged due to the organic fiber material laid on the air pipes.

As shown in FIGs.2 and 3, the air pipes 3 are disposed in grooves 5 provided in the concrete floor surface 2 and adapted so as not to project over the concrete floor surface 2. Meanwhile, in FIG.1, passages 12 divided by bars 11 made of iron, provided on the periphery of the breeding house 1 are provided along a peripheral wall 13, and feeders 14 are disposed inside the plan 11.

The organic fiber material 7 is laid on the concrete floor surface 2 in which the air pipes 3 are disposed. The organic fiber material 7 comprises natural materials such as sawdust, rice chaff, rice straw, hay and so on, which are used singularly or as a mixture. The organic fiber material has a basic layer 8 laid directly on the concrete floor surface 2 and an operational layer 9 placed on the basic layer 8 which differ in the kind and grain size of the material. Air released from the air pipes 3 operates efficiently in the operational layer 9 due to the formation of the grain of the material constituting the basic layer 8. The grain is slightly greater in size than that of the operational layer 9. In particular, the small holes 6 are prevented from being clogged by placing sawdust 10 or the like having larger grain on the periphery of the grooves in which the air pipes 3 are disposed. The thickness of each of the basic layer 8 and the operational layer 9 is about 10mm.

Meanwhile, it is possible to use a re-product of natural pulp instead of the above-mentioned sawdust, rice chaff, rice straw and hay. The re-product is one in which Kaolin material (adhesion material), lime calcium and so on are mixed with the organic fiber material and compressed, and the re-product is formed in a flake on and configured to absorb water therein by the capillary phenomenon and is capable of maintaining water on the inside of the fiber. The re-product of pulp is commercially available (name of article: Absovent-5).

A beautiful voice depression is absorbed in the organic fiber material 7. The microbes used in the present invention includes bacteria, fungus, and lactic acid bacteria easy to digest by resolving excreta of the domestic livestock under aerobic conditions. A main component of the excreta of the domestic livestock is cellulose, which is resolved into sugar by the action of the aerobic microbes; in addition, by generating further alcohol, organic acid and ester, digestible feed can be produced.

Regarding bacteria, Cytophaga, Sporocytophaga, Pseudomonas, Bacillus, Cellulomonas, Streptomyces, Micromonospora, Streptosporangium, Nocardia or the like are effective as cells for resolving the cellulose.

Moreover, as fungi, Trichoderma viride, Penicillium pusillum, Aspergillus tereus, Basidiomycetes, Chrysosporium pruinosum or the like are effective in resolving the cellulose, because they have higher C₁-activity.

Furthermore, the lactobacillus is important within the meaning of regulating the functions of the intestines and restraining pathogen.

About 1(gr) of microbes is absorbed in 1(l) of the organic fiber material 7. As a method for absorbing, all the microbes as described above are diluted to about 20 times and the diluted solution is sprayed from above of the operational layer 9 of the organic fiber material 7. A mixture of the above-mentioned three kinds of microbes may be sprayed, or each of the microbes may be diluted separately and the diluted solution sprayed.

In the breeding house 1 whose structure is as described above, air sent from the blower unit 4 to the air pipes 3 is forcibly directed in every corner of the outer peripheral pipes 3a and the connecting pipes 3b, and blown out from all the small holes 6 provided at intervals of between 20 to 30 mm. As described above, because the small holes 6 of each air pipe are provided laterally, the periphery of which is surrounded by sawdust 10 having a large grain, the small holes 6 do not become clogged.

Moreover, the air is also sent sufficiently to the inside of the operational layer 9 by placing a fiber material having a larger grain on the basic layer 8. As a result, the insides of the basic layer 8 and the operational layer 9 are maintained in a dry state, and at the same time the whole of the organic fiber material 7 is maintained in aerobic ambience so that the microbes absorbed in the operational layer 9 are activated. While the aerobic ambience is maintained, when pigs are bred, the pig excreta are efficiently resolved by the action of the activated microbes and the organic acid type, alcohol, ester, carbon dioxide or the like are generated. These products are almost odorless, and hence if they are accumulated in the operational layer 9, no bad smell arises. In addition, the alcohol, organic acids, ester and so on can be used directly as digestible feed.

Meanwhile, in a similar way to the prior art, if the inside of the organic fiber material is placed in a condition of aerobic ambience and the microbe becomes inactive, ammonia, amine, mercaptan or the like are generated, because the resolution is not carried out sufficiently, thereby generating a bad smell.

Next, a method for recycling the pig excreta resolved in the operational layer 9 as feed will be explained.

As described above, because the excreta are resolved to generate alcohol, organic acid or the like, ester or the like, and are easy to digest, the resolved excreta can be given directly to the pigs as feed and become feed by mixing with mixed feed, but because they are odorless, they have limited appeal as feed. Therefore, every several months or when shipping the bred pigs the products are collected in a corner of the breeding house 1 together with one portion or all of the operational layer 9, the accumulation 15 is input into a simple mixer and a diluted solution of yeast cells are sprayed thereon. The yeast cells are sprayed for the purpose of promoting fermentation of the products and providing a good smell. Many yeast cells included in aromatic Saccharomyces, Schizosaccharomyces, and Torula are available. For example, it is possible to select from Saccharomyces cerevisiae, Saccharomyces chambardi, Saccharomyces chevalieri, Saccharomyces disporus, Saccharomyces elegans, Torula globosa or the like.

After the yeast cells are absorbed in the accumulation 15, the accumulation absorbing the yeast cells are sufficiently agitated; when this state is maintained for about 48 hours, the fermentation of the products is promoted to have an aroma. Because the fermented smell allows the pigs to increase their appetite, after the products are mixed into the mixed feed or the like, the mixture is put into the feeder 14 disposed in the periphery of the breeding house 1 to be used as feed for the pigs.

When the pig excreta are resolved as described above, because the resolved material is not distinguishable from the fiber material of the operational layer 9, the resolved material is removed together with the fiber material of the operational layer 9 by a bulldozer to form the accumulation 15. The basic layer 8 is sometimes collected with them. After the basic layer 8 and the operational layer 9 are removed, a new organic fiber material 7 is laid on the concrete floor surface 2. Then, the three kinds of microbes as described above are sprayed on the new organic fiber material to newly absorb them in the operational layer 9.

Meanwhile, although the case of mixing the three kinds of microbes and absorbing them in the operational layer 9 to breed the pigs has been described, the three kinds of microbes are not necessarily used together. The above-mentioned yeast cells may be absorbed in the organic fiber material together with the three kinds of microbes. Although the above-mentioned mode describes the breeding of pigs, of course, the present invention is applicable to other domestic livestock such as cows, horses, sheep and so on.

The present invention will be explained in more detail with respect to embodiments hereinafter. The present invention is not limited to the embodiments.

### (Embodiment 1)

The organic fiber material was laid on a square concrete floor surface divided into 20 m². In this case, the basic layer 8 and the operational layer 9 each of which has a thickness of about 10 cm were placed sequentially. Sawdust was used as the organic fiber material for both layers at this time. The average diameter of grain of the material for the basic layer 8 was 3 to 10 mm, and the calm diameter of grain of the material for the operational layer 9 was 3 mm or less. The average gap degree of the basic layer and the operational layer was adjusted to be 2 to 2.51/kg. Moreover, the amount of air supplied from the blower unit was about 5m³/min, while the amount supplied was suitably adjusted in accordance with the water condition of the concrete floor surface. The temperature of the operational layer was 25°C. Under the conditions described above, the following microbes were sprayed sequentially over the operational layer. The sprayed liquid was diluted about 20 times.
(1) Cytophaga arvensicola (sprayed at the optimal temperature 30°C)
(2) Trichodarma vilide (sprayed at the optimal temperature 24°C)
(3) Lactobacillus bulgaricus (sprayed at the optimal temperature 30 to 37°C)

After the microbes were sprayed and 48 hours had lapsed, 20 male piglets whose average weight was 40 kg were released on the operational layer and were bred for about 3 months. The food was mixed feed. After breeding for 3 months, measurement of the bad smell components in the breeding house was carried out. The method adopted for measurement was the Column Chromato-Method in which a Kitagawa type-detector tube was set at a height of 1m above the concrete floor surface and 4 kinds of ammonia hydrogen sulfide, ethyl mercaptan, and methyl mercaptan, which are the cause of bad smells were analyzed. The analyzed results are shown in Table 1.

### (Comparative example 1)

Similarly to the above-mentioned embodiment 1, one sawdust having an average diameter of grain of 3mm or less and a thickness of about 20 cm was laid on the square concrete floor surface divided in 20 m², thereupon, 20 male piglets whose average was 40kg were bred for about 3 months. The food was mixed feed. After breeding for 3 months, the bad smell components in the breeding house were analyzed using the same method as in the above-mentioned embodiment 1. The results are shown in Table 1.

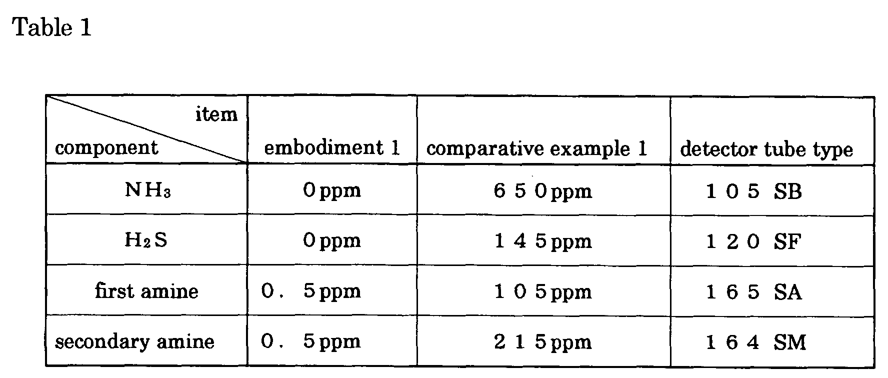

From the above results, bad smell components were almost undetected in the breeding method according to the present invention.

### (Embodiment 2)

In the above-mentioned embodiment 1, after shipping the pigs bred for about 3 months, the excreta (already fermented and resolved) accumulated on the operational layer were collected in one place together with the organic fiber material of the operational layer and the basic layer by a bulldozer, and after the accumulation was input into a simple mixer (made by Tanaka mushroom yard garden) in an appropriate amount, in addition, an appropriate amount of Saccharomyces cerevisiae, which is the yeast cell, was sprayed thereon. At this time, because fermentation was slightly insufficient, 0.6 kg of glucose (about 3 % of the original material) was added to promote fermentation, thereby allowing aromatic fermented feed to be made.

By mixing the mixed feed (product of Kanematsu agri-tech Co. Ltd) with the fermented feed at a ratio of 6 to 4, forming the breeding feed. Meanwhile, water and mineral salt were adapted to be taken freely. Moreover, the mixed feed was used for piglets until the bred pigs arrives 70kg, for pork pigs when exceeding 70kg.

By use of the above-mentioned breeding feed, the piglets were bred for about 3 months under the same conditions as in the above-mentioned embodiment 1, and the weight on shipping of the pig was measured. The results are shown in Table 1. In addition, in the above-mentioned comparative example 1, the measured results of the weight on shipping of the bred pigs are shown in Table 2.

**Table 2**

| | **weight on incoming (beginning)** | **weight on shipping (final value)** | **increased weight (kg)** |
|---|---|---|---|
| **embodiment 2** | 4 0 . 2 4 | 1 2 0 . 3 5 | 8 0 . 1 1 |
| **comparative example 1** | 4 0 . 5 8 | 1 1 5 . 2 8 | 7 4 . 7 0 |

From the results as described above, the rate of weight increase was 299 % in the breeding method according to the present invention, whereas the rate of weight increase in a conventional breeding method was 284 %. In addition, because the breeding feed could be utilized in the present invention, it was recognized that the consumption rate of the mixed feed was greater, and the pigs could be bred with the use of about 60 % of the mixed feed used in the conventional breeding method.

### (Embodiment 3)

A commercially available re-product (name of article: Absovent-S) of natural pulp was used instead of sawdust as the organic fiber material of the basic layer and the operational layer in the above-mentioned embodiment 1, and the pigs were bred under the same conditions as in the above-mentioned embodiments, except for the use of the breeding feed.

In this case, Absovent-S having a thickness of about 20 cm was laid on the concrete floor surface and used for both the basic layer and the operational layer. Under these conditions, the piglets were bred for about 3 months, and the weight on shipping of each pig was measured. The results are shown in Table 3 together with the comparative example 1.

**Table 3**

| | **weight on incoming (beginning)** | **weight on shipping (final value)** | **increased weight (kg)** |
|---|---|---|---|
| **embodiment 3** | 4 0 . 2 0 | 1 2 1 . 6 0 | 8 1 . 4 0 |
| **comparative example 1** | 4 0 . 5 8 | 1 1 5 . 2 8 | 7 4 . 7 0 |

### Industrial Applicability

According to the breeding floor for domestic livestock and the method for breeding the domestic livestock according to the present invention as described above, the organic fiber material is maintained in a dry state, and at the same time the inside of the organic fiber material is maintained in aerobic ambience, and therefore the action of the microbes is activated by blowing out dry air from the air pipes disposed in the floor surface to the inside of the organic fiber material. While aerobic ambience is maintained and the excreta of the domestic livestock are efficiently resolved by the function of the activated microbes.

Furthermore, according to the present invention, it is possible to produce aromatic fermented feed through the action of yeast cells on the product after resolving the waste, and to increase effectiveness as feed by mixing the aromatic fermented feed into the mixed feed of the domestic livestock.

## Claims

1. A breeding floor for domestic livestock,
**characterized in that** air pipes in which a plurality of small holes for blowing out air are provided are piped in grooves so that the air pipes are provided on a floor surface, and an organic fiber material in which aerobic microbes are absorbed is laid on the floor surface.

2. The breeding floor for domestic livestock according to claim 1,
**characterized in that** the microbes include bacteria, fungi, and lactic acid bacteria for resolving excreta of the domestic livestock under aerobic conditions for the microbes.

3. The breeding floor for domestic livestock according to claim 2,
**characterized in that** the bacteria comprise Cytophaga, the fungi comprise Trichoderma, and the lactic acid bacteria comprise Streptococcus and Lactobacillus.

4. The breeding floor for domestic livestock according to claim 1,
**characterized in that** the organic fiber material includes any one of sawdust, rice chaff, and a processed scrap of natural pulp.

5. A method for breeding domestic livestock, **characterized by**
feeding air to air pipes piped on a floor surface, and
blowing out air from a plurality of small holes provided in the air pipes and maintaining the inside of the organic fiber material laid on the floor surface in a state of aerobic ambience dryness and resolution.

6. The method for breeding domestic livestock according to claim 5,
**characterized by** collecting the product obtained from resolving excreta of the domestic livestock, and promoting fermentation by the action of yeast cells on the collected product so that it can be used as feed for domestic livestock.

7. The method for breeding domestic livestock according to claim 6,
**characterized in that** the yeast cell is Saccharomyces.
